# EUROPÄISCHE PATENTANMELDUNG

(11) **EP 3 435 121 A1**
(43) Veröffentlichungstag der Anmeldung: **30.01.2019**
(21) Anmeldenummer: 18176666.8
(22) Anmeldetag: 08.06.2018
(51) Int. Cl.: G01V 8/12

(54) **OPTOELEKTRONISCHER DETEKTOR**

(30) Priorität: 25.07.2017 DE 102017116828
(71) Anmelder: Sick AG, 79183 Waldkirch (DE)
(72) Erfinder: WASLOWSKI, Kai, 79183 Waldkirch (DE); HÖRSCH, Ingolf, 79102 Freiburg (DE); MERETTIG, Gerhard, 79350 Sexau (DE)

(57) **Zusammenfassung**

Die Erfindung betrifft einen optoelektronischer Detektor zur Detektion von Objekten in einem Überwachungsbereich, der umfasst:
- ein Sensormodul, umfassend einen Lichtsender zum Aussenden eines Sendelichtsignals in den Überwachungsbereich, einen Lichtempfänger zum Empfang eines Lichtsignals aus dem Überwachungsbereich und zum Erzeugen eines entsprechenden Empfangssignals und eine Sensorauswerteeinheit zur Auswertung des Empfangssignals und zur Erzeugung von Prozessdaten (Objektfeststellungssignal) und zur Erzeugung von Sensormoduldaten,
- einen Prozessdatenkanal zur Ausgabe der Prozessdaten,
- ein Condition-Monitoring-Modul, aufweisend eine Zustandsauswerteeinheit zur Erzeugung von Conditiondaten,
- eine erste, interne Schnittstelle zwischen dem Sensormodul und dem Condition-Monitoring-Modul zum Übertragen der Sensormoduldaten an das Condition-Monitoring-Modul,
- einen Ringspeicher, der über eine zweite Schnittstelle vom Condition-Monitoring-Modul Daten, bestehend aus den Conditiondaten und/oder Sensormoduldaten, zur temporären Speicherung erhält,
- wobei das Condition-Monitoring-Modul ausgebildet ist, in Abhängigkeit der Conditiondaten und/oder der Sensormoduldaten ein erstes Triggersignal über die zweite Schnittstelle auszugeben,
- und das erste Triggersignal ein weiteres Überschreiben der Daten im Ringspeicher für eine definierte Zeitspanne verhindert,
- und die Daten aus dem Ringspeicher über einen Conditiondatenkanal ausgebbar sind.

## Beschreibung

Die Erfindung betrifft einen optoelektronischen Detektor zur Detektion von Objekten in einem Überwachungsbereich.

Zur Detektion von Objekten in einem Überwachungsbereich werden z. B. optische Lichttaster, Lichtschranken, Einweglichtschranken, Reflexionslichtschranken oder dergleichen eingesetzt, die üblicherweise in Reflexion oder Transmission arbeiten. Bei einem Reflexionslichttaster werden die ausgesendeten Lichtsignale von einem gegebenenfalls im Überwachungsbereich befindlichen Objekt reflektiert und die reflektierten Lichtsignale von einem Lichtempfänger empfangen, so dass aufgrund der empfangenen Lichtsignale das Vorhandensein eines Objekts im Überwachungsbereich erkannt wird. Bei einer Lichtschranke werden die ausgesendeten Lichtsignale bei Abwesenheit eines Objekts im Überwachungsbereich von einem Lichtempfänger entweder direkt oder über einen Reflektor empfangen, wobei das Lichtsignal durch ein im Überwachungsbereich vorhandenes Objekt unterbrochen oder zumindest geschwächt wird, so dass dadurch das Vorhandensein eines Objekts im Überwachungsbereich erkannt wird.

Es ist Aufgabe der Erfindung einen solchen optoelektronischen Detektor derart weiterzubilden, dass er zuverlässiger arbeitet und die zu detektierende Situation besser erfassen kann.

Diese Aufgabe wird gelöst durch einen Detektor mit den Merkmalen des Anspruchs 1 bzw. mit einem Verfahren nach Anspruch 11.

Der erfindungsgemäße optoelektronische Detektor zur Detektion von Objekten in einem Überwachungsbereich umfasst:
- ein Sensormodul, umfassend einen Lichtsender zum Aussenden eines Sendelichtsignals in den Überwachungsbereich, einen Lichtempfänger zum Empfang eines Lichtsignals aus dem Überwachungsbereich und zum Erzeugen eines entsprechenden Empfangssignals und eine Sensorauswerteeinheit zur Auswertung des Empfangssignals und zur Erzeugung von Prozessdaten (Objektfeststellungssignal) und zur Erzeugung von Sensormoduldaten,
- einen Prozessdatenkanal zur Ausgabe der Prozessdaten,
- ein Condition-Monitoring-Modul, aufweisend eine Zustandsauswerteeinheit zur Erzeugung von Conditiondaten,
- eine erste interne Schnittstelle zwischen dem Sensormodul und dem Condition-Monitoring-Modul zum Übertragen der Sensormoduldaten an das Condition-Z,
- einen Ringspeicher, der über eine zweite Schnittstelle vom Condition-Monitoring-Modul Daten, bestehend aus den Conditiondaten und/oder Sensormoduldaten, zur temporären Speicherung erhält,
- wobei das Condition-Monitoring-Modul ausgebildet ist, in Abhängigkeit der Conditiondaten und/oder der Sensormoduldaten ein erstes Triggersignal über die zweite Schnittstelle auszugeben,
- und das erste Triggersignal ein weiteres Überschreiben der Daten im Ringspeicher für eine definierte Zeitspanne verhindert,
- und die Daten aus dem Ringspeicher über einen Conditiondatenkanal ausgebbar sind.

Der wesentliche Gedanke der Erfindung spiegelt sich in drei Kernpunkten wieder. Erstens ist ein zusätzliches Condition-Monitoring-Modul vorgesehen, so dass der Sensor nicht einfach nur seine Detektionsaufgabe erfüllen kann, sondern zusätzlich neben den Prozessdaten, also den Objektfeststellungssignalen, auch weitere Daten liefern kann. Zweitens sind diese Daten dann abrufbar, wenn sie gebraucht werden und drittens können die zusätzlichen Daten über einen separaten Datenkanal ausgegeben werden. Dabei ist mittels eines Ringspeichers dafür Sorge getragen, dass die Datenmenge begrenzt und beherrschbar bleibt.

Prinzipiell kann das Condition-Monitoring-Modul zur Überwachung der Detektionsfähigkeit des Sensors dienen und zur allgemeinen Überwachung der Detektionssituation. Es kann im Fehlerfall zur nachträglichen oder proaktiven Störungsanalyse dienen.

Zwar sind Condition-Monitoring-Module grundsätzlich aus dem Maschinenbau bekannt, allerdings nur zur Überwachung großer Anlagen, wobei die Condition-Monitoring-Module von solcher Art Sensoren, wie sie diese Erfindung beansprucht, ihre Daten erhalten. Solche singulären optoelektronischen Sensoren, wie die hier in Rede stehenden, wie Lichtschranken und Lichttaster, weisen bislang derart aufwändige Condition-Monitoring-Module nicht auf. Sie konnten bisher auch nicht die mit dem Condition-Monitoring einhergehende Datenflut bewältigen.

Die Erfindung sieht jetzt das Condition-Monitoring-Modul vor, das die Conditiondaten aus den Sensormoduldaten erzeugt und die Daten, Conditiondaten und/oder Sensormoduldaten in einem Ringspeicher temporär speichert. Es werden also nur die aktuellen Daten gespeichert. Je nach Kapazität des Ringspeichers können eine bestimmte Anzahl Datensätze gespeichert werden, bevor dann die ältesten Datensätze mit den neuesten überschrieben werden.

Dabei werden die Datensätze nur nach Bedarf über einen separaten Conditiondatenkanal ausgegeben. Die Ausgabe wird durch ein erstes Triggersignal initiiert, dass z. B. nur im Fehlerfall erzeugt wird. So kann eine Überwachung der Funktion erfolgen. Zusätzlich kann das Condition-Monitoring-Modul autonom durch Analyse der Sensormoduldaten einen Trigger erzeugen (wenn z. B. die Außentemperatur einen Grenzwert überschreitet).

Da in der Regel ein Conditiondatensatz vergleichsweise umfangreich ist, z. B. kann der aus Bildern des Detektionsbereichs bestehen, ist der Conditiondatenkanal vergleichsweise langsam. Das ist ausreichend, da der Conditiondatenkanal nur singulär zur Analyse genutzt wird.

Vorzugsweise weisen die Conditiondaten aus dem Ringspeicher, die über den Conditiondatenkanal ausgegeben werden, einen Zeitstempel auf. Das erleichtert und verbessert eine Fehleranalyse erheblich.

In Weiterbildung der Erfindung ist die Sensorauswerteeinheit ausgebildet, in Abhängigkeit der Sensormoduldaten ein zweites Triggersignal über die erste Schnittstelle an das Condition-Monitoring-Modul zu geben. Die Sensorauswerteeinheit kann damit eine azyklische Datenaufnahme (Schnappschuss) auslösen. Die Annahme, dass die Sensorauswerteeinheit selbst einen sinnvollen Trigger erzeugen kann beruht auf der Erfahrung, dass der Zustand der Umgebung gerade dann von Interesse ist, wenn der Sensor aus- oder einschaltet. In diesem Moment tritt das zu detektierende Objekt in Wechselwirkung mit dem Sensor und wird im Idealfall genau an der richtigen Stelle erkannt. Im einfachsten Fall wird der Trigger zum Stopp des Überschreibens im Ringspeicher ausgelöst, wenn das Objektfeststellungssignal des Sensors gerade seinen Zustand wechselt.

In Weiterbildung der Erfindung wird ein Triggersignal an den Ringspeicher dann ausgegeben, wenn eine der folgenden Bedingungen erfüllt ist:
- wenn der Signalverlauf des Empfangssignals sich von den vorigen Signalverläufen signifikant unterscheidet,
- wenn sich die Amplitude des Empfangssignals oder des ausgewerteten Empfangssignals innerhalb eines definierten Zeitraums um mehr als einen definierten Wert ändert. Ein ausgewertetes Empfangssignals könnte beispielsweise ein Differenzsignal sein.
- wenn sich die Amplitude des Empfangssignals oder des ausgewerteten Empfangssignals innerhalb eines definierten Wertebereichs befindet,
- wenn besonders kurze Schaltvorgänge detektiert werden, die derart kurz sind, dass sie nicht einem Objekt zugeordnet werden können,
- wenn das Empfangssignal nahe an eine vordefinierte Schaltschwelle kommt,
- wenn das Empfangssignal übersteuert ist,
- wenn redundante Signale große Abweichung zeigen,
- wenn eine Verschmutzung optischer Bauteile erkannt wird,
- wenn eine Blendung des Lichtempfängers erkannt wird,
- wenn der Detektor eine Störung durch einen anderen, benachbarten Detektor gleicher Bauart erkennt.

Das sind typische Fehlerbedingungen, deren Analyse durch die dann erhältlichen Conditiondaten sehr verbessert wird. Die Erkenntnisse aus der Analyse sind dann für eine Verbesserung und Vermeidung der Fehlerzustände nutzbar.

Wenn aus den Daten eine Qualitätskennzahl mittels geeigneter Vorschriften ermittelbar ist, ist es vorteilhaft, wenn das Condition-Monitoring-Modul ausgebildet ist, diese Qualitätskennzahl zu ermitteln und das erste Triggersignal dann auszugeben, wenn die Qualitätskennzahl in einem vordefinierten Bereich liegt. So kann die Detektionsqualität kontrolliert und womöglich verbessert werden.

Eine weiter verbesserte Funktionsanalyse des Detektors ist möglich, wenn die Daten aus dem Ringspeicher, die über den Conditiondatenkanal ausgegeben werden, eine Information enthalten, welche Bedingung das Triggersignal ausgelöst hat.

In Weiterbildung der Erfindung ist das Condition-Monitoring-Modul über den Conditiondatenkanal programmierbar, so dass die Bedingungen für die Ausgabe des ersten Triggersignals von außen vorgebbar und einstellbar sind, so dass der Detektor nach vorgegebene Kriterien arbeitet.

Zur verbesserten Erkennung der Detektionssituation und damit verbesserten Fuktionsanalyse weist der Detektor Drittsensoren auf, die beispielsweise eine Umgebungstemperatur, eine Einbaulage, eine Versorgungspannung, eine Verlustleistung, eine Lichtstärke der Raumbeleuchtung im Sichtfeld des Detektors, eine Beschleunigung des Detektors, den Luftdruck, eine elektrische oder magnetische Feldstärke oder dergleichen äußeren Einflüsse erfassen. Ein Drittsensor kann auch durch einen optischen Bildaufnehmer, Kamera, gebildet sein, deren Bildaufnahme durch das erste oder zweite Triggersignal ausgelöst wird. Die Drittsensordaten werde zur Erzeugung des Triggersignals von dem Condition-Monitoring-Modul ausgewertet.

Das erfindungsgemäße Verfahren zur Detektion von Objekten in einem Überwachungsbereich umfasst die Schritte:
- Aussenden eines Sendelichtsignals von einem Lichtsender in den Überwachungsbereich, Empfang eines Lichtsignals mit einem Lichtempfänger aus dem Überwachungsbereich und Erzeugen eines entsprechenden Empfangssignals und Auswerten des Empfangssignals, Erzeugen von Prozessdaten und Erzeugen von Sensormoduldaten mit einer Sensorauswerteeinheit,
- Ausgeben der Prozessdaten über einen Prozessdatenkanal,
- Erzeugen von Conditiondaten mit einer Zustandsauswerteeinheit in einem Condition-Monitoring-Modul,
- Übertragen der Sensormoduldaten an das Condition-Monitoring-Modul über eine erste, interne Schnittstelle zwischen dem Sensormodul und dem Condition-Monitoring-Modul,
- Übermitteln der Daten, bestehend aus den Conditiondaten und/oder Sensormoduldaten, vom Condition-Monitoring-Modul an einen Ringspeicher über eine zweite Schnittstelle und temporäres Speichern der Daten,
- Ausgeben eines ersten Triggersignals an den Ringspeicher über die zweite Schnittstelle in Abhängigkeit der Sensormoduldaten,
- nach dem Triggersignal Verhindern eines weiteren Überschreibens der Daten im Ringspeicher für eine definierte Zeitspanne,
- Ausgeben von Daten aus dem Ringspeicher über einen Conditiondatenkanal.

Im Folgenden wird die Erfindung anhand eines Ausführungsbeispiels unter Bezugnahme auf die Zeichnung im Einzelnen erläutert. In der Zeichnung zeigt

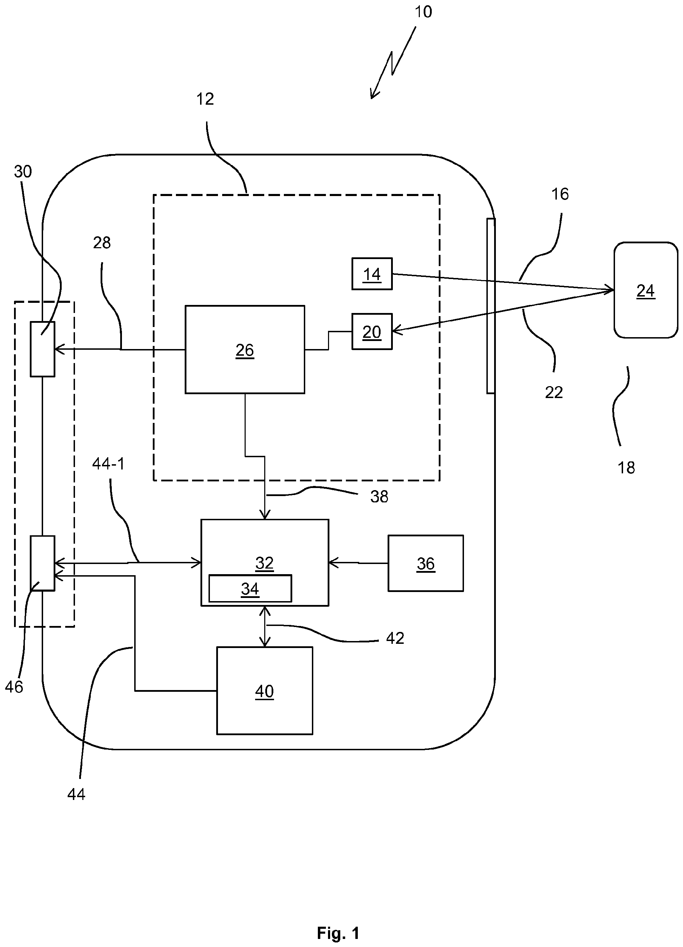

Fig. 1 eine schematische Darstellung eines erfindungsgemäßen Detektors.

Ein erfindungsgemäßer optoelektronischer Detektor 10 weist ein Sensormodul 12 auf. Das Sensormodul 12 umfasst einen Lichtsender 14 zum Aussenden eines Sendelichtsignals 16 in einen Überwachungsbereich 18, einen Lichtempfänger 20 zum Empfang eines Lichtsignals 22 aus dem Überwachungsbereich 18 und zum Erzeugen eines entsprechenden Empfangssignals. In dem dargestellten Ausführungsbeispiel ist der Detektor 10 als Lichttaster ausgebildet, dessen Sendelichtsignal 16 von einem zu detektierenden Objekt 24 im Überwachungsbereich 18 remittiert wird. Das remittierte Licht wird als Empfangslicht 22 vom Lichtempfänger 20 erfasst. Eine Sensorauswerteeinheit 26 dient zur Auswertung des Empfangssignals und zur Erzeugung eines Objektfeststellungssignals aus dem Empfangssignal. Die Objektfeststellungssignale sind zumindest Teil von Prozessdaten und stellen die Daten dar, die der Detektor 10 in seiner Grundfunktion liefert. Die Prozessdaten sind über einen Prozessdatenkanal 28 an einem Ausgang 30 ausgebbar.

Das sind die Grundfunktionen bekannter Lichttaster.

Weiter ist die Sensorauswerteeinheit 26 dazu ausgebildet, Sensormoduldaten zu erzeugen und bereitzustellen. Sensormoduldaten können Daten sein, die neben den Prozessdaten auch anfallen. Das können z. B. die Rohsignale des Lichtempfängers 20 sein, Einzelsignale von einzelnen Lichtelementen des Lichtempfängers oder daraus abgeleitete Größen, wie Amplituden, Frequenzen, Hintergrundsignale oder sonstige Auswertungsergebnisse.

Der erfindungsgemäße Detektor 10 weist weiter ein Condition-Monitoring-Modul 32 auf, das selbst eine Zustandsauswerteeinheit 34 aufweist zur Erzeugung von Conditiondaten. Die Conditiondaten werden entweder aus den Sensormoduldaten hergeleitet oder sind Informationen von Drittsensoren 36 und können Informationen, wie z. B. Umgebungstemperatur, Einbaulage, Versorgungspannung, Verlustleistung, Lichtstärke des Umgebungslichts im Überwachungsbereich 18, Beschleunigung des Detektors 10, Luftdruck, elektrische oder magnetische Feldstärke oder dergleichen Parameter umfassen. Die Conditiondaten können auch Bilder eines optischen Bildaufnehmers, z. B. Kamera, sein.

Zum Übertragen der Sensormoduldaten an das Condition-Monitoring-Modul 32 ist eine erste, interne Schnittstelle 38 zwischen dem Sensormodul 12 und dem Condition-Monitoring-Modul 32 vorgesehen.

Weiter weist der Detektor 10 einen Ringspeicher 40 auf, der zu speichernde Daten temporär abspeichert. Dazu ist der Ringspeicher 40 über eine zweite Schnittstelle 42 mit dem Condition-Monitoring-Modul 32 verbunden. Im Ringspeicher 40 werden nur eine gewissen Anzahl Datensätze gespeichert und zwar so viel, bis er voll ist. Für jeden weiteren Datensatz, der dann gespeichert werden soll, wird dann der älteste gespeicherte Datensatz gelöscht. Je nach Kapazität des Ringspeichers 40 können so eine bestimmte Anzahl Datensätze gespeichert werden, bevor dann die ältesten Datensätze mit den neuesten überschrieben werden. Es sind somit nur die aktuellsten Datensätze gespeichert. Ein Datensatz kann aus den Conditiondaten und/oder Sensormoduldaten bestehen.

Ein Zahlenbeispiel wäre, dass die Größe des Ringspeichers 40 so ausgelegt ist, dass beispielsweise über 24 Stunden hinweg alle 60 Sekunden alle Daten der vorhandenen Drittsensoren abgespeichert werden können. Es fallen dann pro 24 h 1440 Datensätze an.

Weiter ist das Condition-Monitoring-Modul 32 ausgebildet, in Abhängigkeit der Conditiondaten und/oder Sensormoduldaten ein erstes Triggersignal über die zweite Schnittstelle 42 auszugeben. Das Triggersignal verhindert ein weiteres Überschreiben der Daten im Ringspeicher 40 für eine definierte Zeitspanne, so dass die zuletzt gespeicherten Daten aus dem Ringspeicher 40 über einen Conditiondatenkanal 44 an einen Ausgang 46 und vom Detektor 10 ausgebbar sind.

Mit diesen ausgegebenen Daten kann dann eine weitere Analyse durchgeführt werden. Dies kann zum Beispiel dem Ziel dienen, die Betriebsbedingungen in regelmäßigen Zeitabständen auszulesen und zu erfahren. Oder es kann dazu dienen, einen Fehler zu analysieren, wenn das Triggersignal auf eine einmalige Fehlfunktion hin ausgelöst wird.

Allerdings kann die Fehldetektion ja auch gerade darin bestehen, dass das Objektfeststellungssignal nicht ausgelöst wurde. Deshalb kann es sinnvoll sein, für die Generierung des Triggersignals aus den Sensormoduldaten Größen zu extrahieren und/oder zeitliche Ableitungen dieser Größen und/oder statistische Merkmale dieser Größen zu bewerten. Ziel dieser Bewertung ist die Erhöhung der Entscheidungssicherheit bei der Entscheidung "Objekt vorhanden"/"Objekt nicht vorhanden". Aus den genannten Größen kann ebenso ein numerisches Vertrauensmaß ermittelt werden, welches angibt, wie "vertrauenswürdig" das aktuelle Objektfeststellungssignal ist beziehungsweise wie wahrscheinlich das Umschalten in den inversen Zustand "Objekt vorhanden"/"Objekt nicht vorhanden" gerade ist. Das numerische Vertrauensmaß wird auch als Qualitätskennzahl bezeichnet. Unterschreitet das Vertrauensmaß einen einstellbaren Grenzwert, kann das Triggersignal ausgelöst werden.

Beispiele für Ereignisse, die das Triggersignal auslösen könnten, sind:
- der Schaltvorgang (aus->ein oder ein->aus),
- besonders kurze Schaltvorgänge, also z. B. Spikes, die ganz offensichtlich keinem Objekt 24 zugeordnet werden können, da alle zu detektierenden Objekte sich viel länger als die Spikedauer im Sichtbereich des Detektors 10 befinden,
- das Sensorsignal kommt nahe an eine Schaltschwelle,
- das Sensorsignal ist übersteuert,
- redundante Signale zeigen eine große Abweichung voneinander,
- Verschmutzungen optischer Komponenten, insbesondere einer Frontscheibe, werden erkannt,
- der Lichtempfänger 20 ist durch Glühlicht oder Sonnenlicht optisch geblendet ("DC Overflow"),
- der Lichtempfänger 20 ist durch Licht mit hohem HF-Anteil (z. B. LED Licht oder Licht von Energiesparlampen) optisch geblendet ist ("AC Overflow),
- der Lichtempfänger 20 ist durch einen Lichtsender eines anderen Detektors optisch geblendet.
- einer der Drittsensoren 36, wie Temperatursensor, Helligkeitssensor oder Beschleunigungssensor erreicht einen bestimmten Wert.

Daraus für den Anwender des Detektors 10 abgeleitete Handlungsempfehlungen könnten zum Beispiel sein:
- Wenn die Stromaufnahme stark von der Spezifikation abweicht, dann tausche den Sensor gegen ein neues Gerät aus.
- Wenn Verschmutzungen festgestellt werden, reinige die Frontscheibe.
- Wenn die Lage des Sensors sich verändert hat, wiederhole die mechanische

Justage.
- Wenn Störlicht erkannt wurde, ändere die äußeren Lichtquellen.
- Wenn elektrische Störungen erkannt wurden, überprüfe das Netzteil und die Zuleitungen.
- Wenn das Fremdlicht von anderen Detektoren im Sichtbereich erkannt wird, ändere die Anordnung.
- Wenn beim letzten Objekt der Empfangssignalverlauf deutlich anders gewesen ist als bei den Objekten davor, prüfe, ob das Objekt korrekt war oder erkannt werden sollte.
- Wenn im Detektionsbereich das Signal kurzfristig steil ansteigt aber nicht zur Objektfeststellung führt, untersuche, ob diese Objekte zukünftig erkannt oder besser als bisher unterdrückt werden sollen.
- Wenn der Hintergrund sich ändert, prüfe, ob das richtig ist und sein kann oder ein Fehler vorliegt.
- Wenn teilweise ungewöhnlich große oder kleine Signalamplituden auf dem Objekt oder im Hintergrund auftreten, prüfe, ob glänzende Objekte vorliegen und ob z. B. eine Verkippung des Sensors solche Amplituden vermeidet.

Vorteilhaft werden die Conditiondatensätze nur nach Bedarf über den separaten Conditiondatenkanal 44 ausgegeben. Die Ausgabe wird durch das erste Triggersignal initiiert. Der Conditiondatenkanal 44 kann die Daten vergleichsweise langsam übermitteln, da der Conditiondatenkanal 44 nur singulär zur Analyse genutzt wird.

Vorzugsweise weisen die Conditiondaten aus dem Ringspeicher 40, die über den Conditiondatenkanal 44 ausgegeben werden, einen Zeitstempel auf. Das erleichtert und verbessert eine Fehleranalyse erheblich. Dazu ist in dem Condition-Monitoring-Modul 32 ein Zähler oder eine Uhr vorgesehen, um den Zeitstempel erzeugen zu können.

In einer Ausführungsform der Erfindung enthält der über den Conditiondatenkanal 44 ausgegebene Conditiondatensatz eine Information, welche der Bedingungen das Triggersignal ausgelöst hat.

In Weiterbildung der Erfindung ist die Sensorauswerteeinheit 26 ausgebildet, in Abhängigkeit der Sensormoduldaten ein zweites Triggersignal über die erste Schnittstelle an das Condition-Monitoring-Modul zu geben, das dann wie das erste Triggersignal den Ringspeicher 40 stoppt und eine Ausgabe eines Conditiondatensatzes initiiert. Die Sensorauswerteeinheit 26 kann damit selbst eine azyklische Datenaufnahme (Schnappschuss) auslösen. Die Annahme, dass die Sensorauswerteeinheit 26 selbst einen sinnvollen Trigger erzeugen kann beruht auf der Erfahrung, dass der Zustand der Umgebung gerade dann von Interesse ist, wenn der Detektor 10 aus- oder einschaltet. In diesem Moment tritt das zu detektierende Objekt 24 in Wechselwirkung mit dem Detektor 10 und wird im Idealfall genau an der richtigen Stelle erkannt. Im einfachsten Fall wird der Trigger zum Stopp des Überschreibens im Ringspeicher 40 ausgelöst, wenn das Objektfeststellungssignal des Detektors 10 gerade seinen Zustand wechselt.

Andere auslösende Bedingungen sind denkbar. So kann der Detektor 10 eine nicht dargestellte Bewertungs-Einheit in der Sensorauswerteeinheit 26 aufweisen, die aus den erfassten primären physikalischen Größen (dies sind bei einem optischen Sensor naturgemäß die digitalisierten Fotodiodenströme) das Triggersignal für das Condition-Monitoring-Modul 32 berechnet. Für einen Triangulations-Lichttaster kann diese Bewertungs-Einheit konkret so implementiert werden, dass die typische Verteilung der digitalisierten Fotodiodenströme für gutmütige Tastobjekte über den Arbeitsbereich des Detektors ermittelt werden (Lichtfleck-Verteilung auf dem Lichtempfänger 20, Lichtfleck-Durchmesser, Summen-Signal einzelner Lichtempfangselemente des Lichtempfängers 20) und als Referenz-Tabelle im Detektor hinterlegt sind und dass die aktuelle Verteilung der digitalisierten Fotodiodenströme mit den hinterlegten Daten verglichen werden. Weicht die Verteilung der digitalisierten Fotodiodenströme in mindestens einem Kriterium von der Referenz ab, wird das Triggersignal ausgegeben. Eine solche typische Verteilung der Bewertungsgrößen kann entweder fest im Detektor hinterlegt sein (z. B. die Abhängigkeit der Spotbreite auf dem Lichtempfänger 20 von der Spotposition auf dem Lichtempfänger 20) oder während des Detektorbetriebs automatisch generiert werden. Auf diese Weise kann der Anwender dann aus den Conditiondaten unter impliziter Kenntnis seiner Anwendung ermitteln, in welchem Fall Störungen des Sensorbetriebs auftreten. Solche Störungen können z. B. durch Objekte mit stark glänzenden Stellen, umgefallene, stark vibrierende oder gestaute Objekte verursacht sein.

In Weiterbildung der Erfindung ist das Condition-Monitoring-Modul über einen Teil 44-1 des Conditiondatenkanals 44 programmierbar, so dass die Bedingungen für die Ausgabe des ersten Triggersignals von außen vorgebbar und einstellbar sind, so dass der Detektor 10 nach vorgegebene Kriterien arbeitet. Sämtliche erfasste Messgrößen (des Sensormoduls 12 und des Condition-Monitoring-Moduls 32) sollten vorteilhafterweise dazu mit Fenster-Komparatoren bewertbar und logisch verknüpfbar sein.

## Patentansprüche

1. Optoelektronischer Detektor zur Detektion von Objekten (24) in einem Überwachungsbereich (18) mit
- einem Sensormodul (12), umfassend einen Lichtsender (14) zum Aussenden eines Sendelichtsignals (16) in den Überwachungsbereich (18), einen Lichtempfänger (20) zum Empfang eines Lichtsignals (22) aus dem Überwachungsbereich (18) und zum Erzeugen eines entsprechenden Empfangssignals und eine Sensorauswerteeinheit (26) zur Auswertung des Empfangssignals und zur Erzeugung von Prozessdaten und zur Erzeugung von Sensormoduldaten,
- einem Prozessdatenkanal (28) zur Ausgabe der Prozessdaten,
- einem Condition-Monitoring-Modul (32), aufweisend eine Zustandsauswerteeinheit (34) zur Erzeugung von Conditiondaten,
- einer ersten internen Schnittstelle (38) zwischen dem Sensormodul (12) und dem Condition-Monitoring-Modul (32) zum Übertragen der Sensormoduldaten an das Condition-Monitoring-Modul (32),
- einem Ringspeicher (40), der über eine zweite Schnittstelle (42) vom Condition-Monitoring-Modul (32) Daten, bestehend aus den Conditiondaten und/oder Sensormoduldaten, zur temporären Speicherung erhält,
- wobei das Condition-Monitoring-Modul (32) ausgebildet ist, in Abhängigkeit der Conditiondaten und/oder Sensormoduldaten ein erstes Triggersignal über die zweite Schnittstelle (42) auszugeben,
- und das erste Triggersignal ein weiteres Überschreiben der Daten im Ringspeicher (40) für eine definierte Zeitspanne verhindert,
- und die Daten aus dem Ringspeicher (40) über einen Conditiondatenkanal (44) ausgebbar sind.

2. Detektor nach Anspruch 1, **dadurch gekennzeichnet, dass** die Daten aus dem Ringspeicher, die über den Conditiondatenkanal ausgegeben werden, einen Zeitstempel aufweisen.

3. Detektor nach einem der vorhergehenden Ansprüche, **dadurch gekennzeichnet, dass** die Sensorauswerteeinheit (26) ausgebildet ist, in Abhängigkeit der Sensormoduldaten ein zweites Triggersignal über die erste Schnittstelle an das Condition-Monitoring-Modul zu geben.

4. Detektor nach einem der vorhergehenden Ansprüche, **dadurch gekennzeichnet, dass** die Sensorauswerteeinheit ausgebildet ist, das zweite Triggersignal dann auszugeben, wenn sich das Objektfeststellungssignal ändert.

5. Detektor nach einem der vorhergehenden Ansprüche, **dadurch gekennzeichnet, dass** das Condition-Monitoring-Modul ausgebildet ist, das erste Triggersignal dann auszugeben, wenn eine der folgenden Bedingungen erfüllt ist:
- wenn der Signalverlauf des Empfangssignals sich von den vorigen Signalverläufen signifikant unterscheidet,
- wenn sich die Amplitude des Empfangssignals oder des ausgewerteten Empfangssignals innerhalb eines definierten Zeitraums um mehr als einen definierten Wert ändert. (Anmerkung: ausgewertetes Empfangssignals könnte beispielsweise das Differenzsignal sein),
- wenn sich die Amplitude des Empfangssignals oder des ausgewerteten Empfangssignals innerhalb eines definierten Wertebereichs befindet,
- wenn besonders kurze Schaltvorgänge detektiert werden, die derart kurz sind, dass sie nicht einem Objekt zugeordnet werden können,
- wenn das Empfangssignal nahe an eine vordefinierte Schaltschwelle kommt,
- wenn das Empfangssignal übersteuert ist,
- wenn redundante Signale große Abweichung zeigen,
- wenn eine Verschmutzung optischer Bauteile erkannt wird,
- wenn eine Blendung des Lichtempfängers erkannt wird,
- wenn der Detektor eine Störung durch einen anderen, benachbarten Detektor gleicher Bauart erkennt.

6. Detektor nach einem der vorhergehenden Ansprüche, **dadurch gekennzeichnet, dass** das Condition-Monitoring-Modul ausgebildet ist, eine Qualitätskennzahl zu ermitteln und das erste Triggersignal dann ausgibt, wenn die Qualitätskennzahl in einem vordefinierten Bereich liegt.

7. Detektor nach Anspruch 5 oder 6, **dadurch gekennzeichnet, dass** die Daten aus dem Ringspeicher, die über den Conditiondatenkanal ausgegeben werden, eine Information enthalten, welche Bedingung das Triggersignal ausgelöst hat.

8. Detektor nach einem der vorhergehenden Ansprüche, **dadurch gekennzeichnet, dass** das Condition-Monitoring-Modul über den Conditiondatenkanal programmierbar ist, so dass die Bedingungen für die Ausgabe des ersten Triggersignals einstellbar sind.

9. Detektor nach einem der vorhergehenden Ansprüche, **dadurch gekennzeichnet, dass** der Detektor Drittsensoren aufweist, deren Drittsensordaten zur Erzeugung des ersten Triggersignals von dem Condition-Monitoring-Modul ausgewertet werden.

10. Detektor nach einem der vorhergehenden Ansprüche, **dadurch gekennzeichnet, dass** eine Kamera vorgesehen ist, deren Bildaufnahme durch das erste oder zweite Triggersignal ausgelöst wird.

11. Verfahren zur Detektion von Objekten in einem Überwachungsbereich mit den Schritten:
- Aussenden eines Sendelichtsignals von einem Lichtsender in den Überwachungsbereich, Empfang eines Lichtsignals mit einem Lichtempfänger aus dem Überwachungsbereich und Erzeugen eines entsprechenden Empfangssignals und Auswerten des Empfangssignals, Erzeugen von Prozessdaten und Erzeugen von Sensormoduldaten mit einer Sensorauswerteeinheit,
- Ausgeben der Prozessdaten über einen Prozessdatenkanal,
- Erzeugen von Conditiondaten mit einer Zustandsauswerteeinheit in einem Condition-Monitoring-Modul,
- Übertragen der Sensormoduldaten an das Condition-Monitoring-Modul über eine erste, interne Schnittstelle zwischen dem Sensormodul und dem Condition-Monitoring-Modul,
- Übermitteln der Daten, bestehend aus den Conditiondaten und/oder Sensormoduldaten, vom Condition-Monitoring-Modul an einen Ringspeicher über eine zweite Schnittstelle und temporäres Speichern der Daten,
- Ausgeben eines ersten Triggersignals an den Ringspeicher über die zweite Schnittstelle in Abhängigkeit der Sensormoduldaten,
- nach dem Triggersignal Verhindern eines weiteren Überschreibens der Daten im Ringspeicher für eine definierte Zeitspanne,
- Ausgeben von Daten aus dem Ringspeicher über einen Conditiondatenkanal.
